# EUROPEAN PATENT SPECIFICATION

(11) **EP 3 150 931 B1**
(45) Date of publication and mention of the grant of the patent: **16.09.2020**
(21) Application number: 16191475.9
(22) Date of filing: 29.09.2016
(51) Int. Cl.: F24F 3/14, F24F 6/00, B01D 46/10, F24F 13/08, F24F 7/06, F24F 3/16, F04D 29/54, F04D 29/32, F04D 25/08, F04D 25/06, F04D 19/00, B01D 46/24

(54) **AIR PURIFIER AND BLOWER DEVICE THEREOF**
LUFTREINIGER UND BLASEINRICHTUNG DAVON
PURIFICATEUR D'AIR ET DISPOSITIF DE SOUFFLERIE ASSOCIÉ

(30) Priority: 29.09.2015 CN 201510634781
(43) Date of publication of application: 05.04.2017
(73) Proprietor: Xiaomi Inc., Beijing 100085 (CN)
(72) Inventor: SU, Jun, Haidian District, Beijing 100085 (CN); WANG, Yi, Haidian District, Beijing 100085 (CN); YU, Zhuoli, Haidian District, Beijing 100085 (CN); YUYA, Omoto, Haidian District, Beijing 100085 (CN)
(74) Representative: Grunert, Marcus

(56) References cited:
- CN-A- 104 456 772
- DE-U1-202006 016 932
- US-A1- 2003 150 326
- US-A1- 2008 138 199
- US-A1- 2014 079 536

## Description

### TECHNICAL FIELD

The invention relates to the field of blower for an air purifier, and more particularly, to a blower device and an air purifier using the blower device.

### BACKGROUND

In the relative arts, a fan is generally used as a blower device for blowing air in an air purifier. The structure of the fan affects directly the performances of the air purifier in the aspects of blowing efficiency, noise generated, and so on.

In CN 104 456 772 A a blower device for an air purifier is disclosed, the blowing device including two fans driven by a motor. Both fans are of the axial type, but can also be of the radial type.

Further blowing devices including two fans driven by a driving device are known from US 2003/0150326 A1, US 2014/0079536 A1, US 2008/0138199 A1 and DE 20 2006 016 932 U1.

### SUMMARY OF THE INVENTION

In order to overcome the problems existing in the relative arts, the invention provides an air purifier and a blower device thereof.

According to a first aspect of an embodiment of the invention, there is provided a blower device for an air purifier according to claim 1, including among other features a first fan and a second fan having a same blowing direction and arranged sequentially in the blowing direction at an interval. The first fan and second fan are mounted coaxially and driven synchronously by a motor.

According to a second aspect of an embodiment of the invention, there is provided an air purifier according to claim 8, including among other features a purifier body and an exhaust channel provided on the purifier body. Said exhaust channel is mounted with the blower device provided by the examplary embodiment of the disclosure.

The technical solutions provided by the embodiments of the invention can include the following advantageous effect: by using the two fans provided at an interval and driven synchronously by one motor, the blowing efficiency of the air purifier can be improved significantly, and a simple structure and good applicability can be obtained.

It should be understood that the above general explanation and other detailed explanation are illustrative and explanative, rather than limiting the disclosure.

### BRIEF DESCRIPTION OF THE DRAWINGS

The accompanying drawings, which are incorporated in and constitute a part of this specification, illustrate embodiments consistent with the invention and, together with the description, serve to explain the scope of the invention which is defined by the appended claims.
Fig. 1 is an illustrative view showing a cross-section structure of an air purifier according to an examplary embodiment.
Fig. 2 is an illustrative view showing a structure of a blower device according to an examplary embodiment.
Fig. 3 is an illustrative view showing a top view structure of a second fan according to an examplary embodiment.
Fig. 4 is an illustrative view showing a top view structure of a first fan according to an examplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

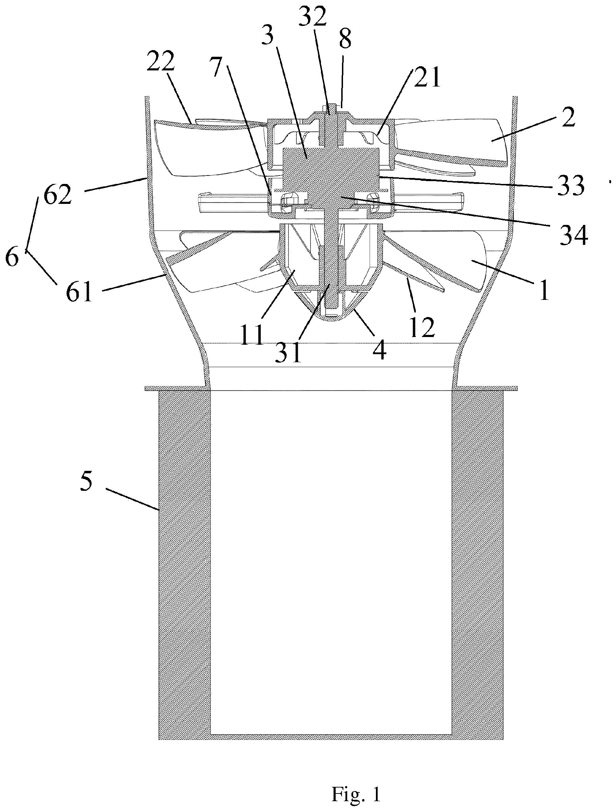

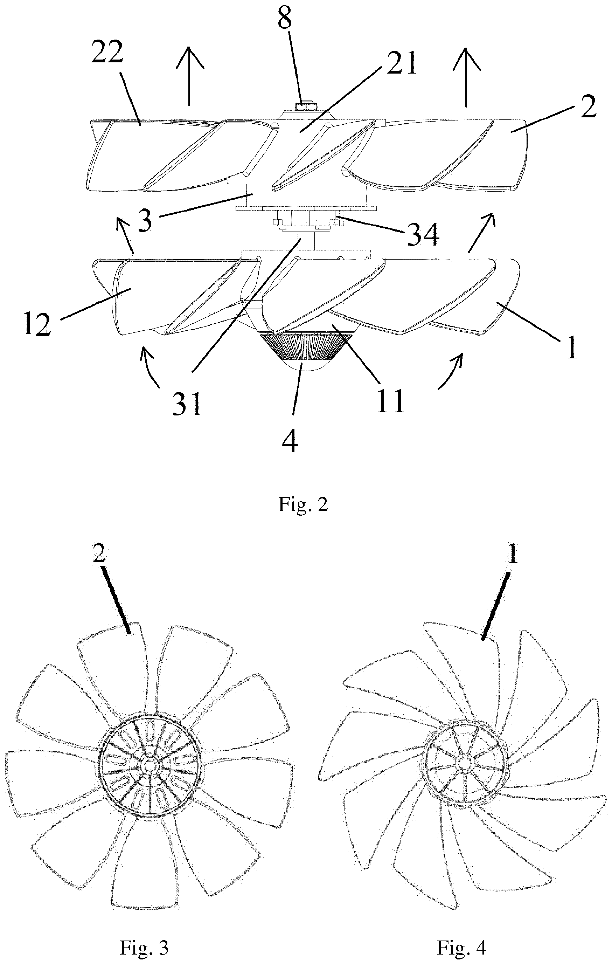

The orientation terms such as "up" and "down" are generally defined in the normal operating situation of the air purifier provided by the examplary embodiments of the disclosure unless otherwise represented, and the paper directions shown in Figs. 1 and 2 may be considered as detailed references. The terms "inside" and "outside" mean the inside and outside of the outlines of the corresponding members. The terms "far" and "near" are defined based on the blowing direction, i.e., the air flows from near to far.

As shown in Figs. 1-4, an examplary embodiment of the invention provides a blower device for an air purifier, and an air purifier using the blower device. As shown in Figs. 1-2, in the present embodiment, the blower device comprises a first fan 1 and a second fan 2 which are arranged sequentially in the air blowing direction at an interval. The first fan 1 and the second fan 2 are mounted coaxially and driven synchronously by a motor 3. Wherein the two fans are arranged upper and lower, achieving a bottom-to-up air blowing. In some other embodiments, the two fans may be arranged at any angles. Therefore, by the two fans arranged at an interval and driven synchronously by one motor 3, the air blowing may be improved effectively, such that the air purification may be improved.

Wherein, in the present embodiment of the invention, the air blower is designed such that the first fan 1 has a blowing pressure larger than that of the second fan 2, and the second fan 2 has a blowing rate larger than that of the first fan 1. In this case, since the first fan 1 has a larger blowing pressure, the suction force of the blower device may be improved, and in the other hand, this may facilitates a lot of air to be gathered at the intake side, such that the air may be blown by the second fan 2 at a large rate, and the blowing efficiency may be improved. Wherein the above-mentioned design of air pressure and rate may be achieved by the two-fan design. For example, in an examplary embodiment, as shown in Figs. 3 and 4, the first fan 1 may be a mixed flow fan, and the second fan 2 may be an axial flow fan. Wherein the mixed flow fan is a fan in between the axial flow fan and the centrifugal fan, characterized by a larger air pressure and smaller air rate than that of the axial flow fan. In some other embodiments, the desired air rate and air pressure in the embodiments of the invention may be achieved by means of particularly designed structure for the vanes of the two fans, and etc.

In the present examplary embodiment, to facilitate the two fans to be driven synchronously by one motor, the motor 3 may be a dual-shaft extending motor, i.e., a motor having two rotary shafts extending in opposite directions, such as the first rotary 31 and the second rotary shaft 32 as shown in Fig. 1, such that the two fans may be driven synchronously. Further, the dual-shaft extending motor is mounted between the rotary centres of the first fan 1 and second fan 2, such that the space may be fully used and the thickness of the entire blower device can be reduced along the air blowing direction. In the present embodiment, the two rotary shafts of the motor 3 may be driven by the same rotor, i.e., the two fans are rotated in the same direction and have the same air blowing direction. In some other possible embodiments, the two shafts of the motor 3 may be rotated in the opposite directions, such that the two fans have opposite rotary directions. In this case, the two fans may also have the same air blowing direction by means of just providing the vanes mounted in opposite directions.

Wherein, as an examplary mounting embodiment, a first hub 11 of the first fan 1 is connected to a first rotary shaft 31 of the motor 3, a second hub 21 of the second fan 2 is connected to a second rotary shaft 32 of the motor 3, a housing 33 of the motor 3 is partially disposed into the first hub 11 or the second hub 21, and an exposed end is provided with a mounting portion 34 for mounting into the air purifier. In this case, by partially mounting the motor 3 into one of the two hubs, the space of the two fans along the air blowing direction may be fully used, and the thickness may be prevented from increasing along the air blowing direction. In addition, the mounting portion 34 provided at the exposed end may facilitate mounting the blower device of the present embodiment into the air purifier.

As shown in Fig. 1, the air purifier of the present examplary embodiment comprises a purifier body 5 and an exhaust channel 6 provided on the purifier body 5, wherein inside the purifier body 5 there are a filter core, a water chamber and other members for filtering and humidifying the air. In order to blow out the purified air, the above-mentioned blower device is mounted within the exhaust channel 6. Thus, the air blowing direction in the present embodiment is the direction from the purifier body 5 toward the exhaust channel 6, i.e., the first fan 1 is provided near the purifier body 5, and the second fan 2 is provided near the air outlet port of the exhaust channel 6. In the present embodiment, to facilitate mounting the blower device into the air purifier and detaching it for future maintenance, the above-mentioned blower device is detachably mounted into the exhaust channel 6. In some other possible embodiments, the blower device may be permanently fixed into the exhaust channel 6.

As shown in Fig. 1, the housing 33 of the motor 3 is partially mounted into the second hub 21, and the end extending out of the second hub 21 is provided with the mounting portion 34. The exhaust channel 6 is provided a mounting annular seat 7 therein. The first rotary shaft 31 is passed through a central through hole of the mounting annual seat 7 and detachably connected with the second fan 2. The mounting portion 34 is snapped onto the mounting annular seat 7. In this case, the blower device in the present embodiment can be mounted by means of the air outlet port. For example, firstly the motor 3 and the second fan 2 may be assembled, whereafter the first rotary shaft 31 may be passed through the mounting annular seat 7 through the air outlet port of the exhaust channel 6, and then the first rotary shaft 31 and the first fan 1 are assembled from a side of the purifier body 5.

Wherein, the mounting annular seat 7 may be fixed to the centre of the exhaust channel 6 through connection ribs circumferentially provided at intervals, or may be achieved through an annular plate fixed to the exhaust channel 6. The detachable connection between the mounting portion 34 and the mounting annular seat 7 may be achieved by various manners so as to facilitate the assembling of the both. For example, a plurality of snapping blocks may be arranged along an outer circumference of the mounting portion 34, and a snapping groove may be provided on the mounting annular seat 7, such that snapping connection between the snapping blocks and the snapping groove can be achieved by the circumferential rotation of the snapping blocks within the snapping groove, and the operation is easy. In some other embodiments, the snapping connection may have other various manners, or the mounting portion 34 and the mounting annular seat 7 may be connected by threading connection.

In the present embodiment, the second fan 2 and the second rotary shaft 32 may adopt a detachable connection. For example, the second rotary shaft 32 is passed through the second hub 21 and comes into profile surface connection with the second hub 21. Such profile surface connection is a hole-shaft fitting manner of non-circular cross section, which can transmit the torque without limiting the axial movement. For example, the corresponding portion of the second rotary shaft 32 may be formed as a rectangular shaft, or a corresponding fitting profile surface may be formed by machining. In addition, the connection between the both may be achieved by spline, threading or other manners. For further axially locking, the end of the second rotary shaft is detachably connected with a limiting nut 8, thereby the assembling between the second fan 2 and the motor 3 is completed.

Furthermore, similarly, the first rotary shaft 31 is passed through the first hub 11 and comes into profile surface connection with the first hub 11, facilitating the assembling and detaching of the both, as well. Wherein, in order for axially limiting, the end of the first rotary shaft 31 is detachably connected with a guiding cap 4. Wherein, in the present embodiment, besides limiting the first fan, the guiding cap 4 also serves to guide the air flow. As shown in Figs. 1 and 2, since the guiding cap 4 is provided at the centre of proximal end of the first hub 1, the air flow may be guided to a plurality of first vanes 12 connected to the first hub 11 at circumferential intervals, such that the air blowing efficiency may be improved while the noise may be reduced. Wherein, in order to uniformly guide the air flow to all around, the guiding cap 4 is formed as a conical cap with an arced head.

In addition, in the air purifier provided by the present embodiment, the exhaust channel 6 comprises a first air channel 61 and a second air channel 62 connected in the air blowing direction. The first air channel 61 is formed as a conical structure having a cross-section increasing gradually in the air blowing direction, and the second air channel 62 is formed as a cylindrical structure. Such design allows fully using the transverse space for the purifier body 5 near the first air channel 61, reducing the transverse size of the purifier body 5 as possible so as to reduce the footprint. Through the transition of the first air channel 61, the second air channel 62 with the larger cross-section can be used, ensuring the air blowing rate and effectiveness of the air purifier.

Further, as shown in Fig. 1, the first fan 1 is positioned at the first air channel 61, and the second fan 2 is positioned at the second air channel 62, such that a side edge of the guiding cap 4 positioned at the proximal centre of the first hub 11 can be substantially parallel to a side wall of the first air channel 61, thereby the air flow would be guided smoothly by the guiding cap 4 to the first vane 12 as shown by the arrow in Fig. 2, reducing the noise while ensuring the intake rate. Furthermore, as shown by the arrow in Fig. 2, the first fan 1 has an exhaust direction in the axial direction and inclined outwards, and the second fan 2 has an exhaust direction extending in the axial direction. That is, the first fan has substantially the same air blowing direction and exhaust direction, ensuring the air blowing for the second fan 2 while further reducing the noise. Wherein the exhaust direction of the first fan 1 can be achieved by adopting the first vanes 12 slightly inclined towards the proximal side in the axial direction.

In order to fully use the air flow rate provided by the first fan 1, as shown in Figs. 1 and 2, in the present embodiment, the first fan 1 and second fan 2 have the same diameter. In this case, the second fan 2 can blow out all the air flow rate provided by the first fan 1, ensuring the air blowing effectiveness. Wherein, in some embodiments, such as the above-mentioned first fan 1 having the exhaust direction inclined outwards, the first fan 1 may have a diameter slightly smaller than that of the second fan 2, the difference between the sizes depending on the outward inclination of the second fan 2. That is, in case that the exhaust rate of the first fan 1 can be fully used, the first fan 1 may be designed to be slightly smaller, which may also facilitate the accommodation into the conical tapered structure of the first air channel 61.

Further, the space between the two fans concerns the noise generated by the air blower device. The noise will be smaller when the two fans become more distanced. However, infinite distance will not only take up the space but also reduce the cooperation of the two fans. Therefore, in the present embodiment, the distance between the first fan 1 and the second fan 2 is 4mm-200mm.

In the present embodiment, the two fans provided at an interval may be deemed as one fan having a larger thickness, the middle area of which fan being cut to form two fans. That is, as shown in Figs. 3 and 4, the first fan 1 has the same number of the first vanes 12 as the number of the second vanes 22 of the second fan 2, and the number of the vanes may be 9 for example. In order that the air flow generated by the two fans provided at an interval can be substantially as smooth as that generated by one fan, in the neighbouring first vane 12 and second vane 22, the second vane 22 is staggered backwards in the circumferential direction from the first vane 12, wherein the neighbouring first vane 12 and second vane 22 means two vanes with smallest distance. Such design is made from the consideration that, since the interval presented between the two fans, the air flowing to the interval may be delayed by a resistance force. Therefore, the second vane 22 is staggered backwards in the circumferential direction, i.e., in the rotary direction, from the first vane 12, allowing the delayed air flowing smoothly into the second fan 2, such that a continous and smooth air flow is formed, ensuring the air blowing effectiveness while reducing the noise effectively.

## Claims

1. A blower device for an air purifier, wherein the air blower device comprises a first fan (1) and a second fan (2) which have a same blowing direction and are arranged sequentially in the air blowing direction at an interval; and the first fan (1) and the second fan (2) are mounted coaxially and driven synchronously by a motor (3),
**characterized in that** the first fan (1) is adapted to have a blowing pressure larger than that of the second fan (2), and the second fan (2) is adapted to have a blowing rate larger than that of the first fan (1), and **in that** the first fan (1) being a mixed flow fan in between an axial flow fan and a centrifugal flow fan, and the second fan (2) being an axial flow fan.

2. The blower device for the air purifier according to claim 1, **characterized in that** the motor (3) is a dual-shaft extending motor mounted between the rotary centres of the first fan (1) and the second fan (2).

3. The blower device for the air purifier according to claim 1 or 2, **characterized in that** a first hub (11) of the first fan (1) is connected to a first rotary shaft (31) of the motor (3); a second hub (21) of the second fan (2) is connected to a second rotary shaft (32) of the motor (3); a housing (33) of the motor (3) is partially disposed into the first hub (11) or the second hub (21); and an exposed end is provided with a mounting portion (34) for mounting into the air purifier.

4. The blower device for the air purifier according to claim 3, **characterized in that** the first hub (11) of the first fan (1) is provided with a guiding cap (4) at a proximal centre, for guiding the air flow to a plurality of first vanes (12) connected to the first hub (11) at circumferential intervals, preferably the guiding cap (4) being formed as a conical cap with an arced head.

5. The blower device for the air purifier according to any one of the claims 1 to 4, **characterized in that** the first fan (1) has a diameter equal to or smaller than that of the second fan (2).

6. The blower device for the air purifier according to any one of the claims 1 to 5, **characterized in that** a distance between the first fan (1) and the second fan (2) is 4mm-200mm.

7. The blower device for the air purifier according to any one of claims 4 to 6, **characterized in that** the number of the first vanes (12) of the first fan (1) is the same as a number of second vanes (22) of the second fan (2), and in the neighbouring first vane (12) and second vane (22), the second vane (22) is staggered backwards in a circumferential direction from the first vane (12).

8. An air purifier, comprising:
a purifier body (5) and an exhaust channel (6) provided on the purifier body (5), **characterized in that** an inside of the exhaust channel (6) is mounted with the blower device according to any one of the claims 1-7.

9. The air purifier according to claim 8, **characterized in that** the exhaust channel (6) comprises a first air channel (61) and a second air channel (62) connected in the air blowing direction; the first air channel (61) is formed as a conical structure having a cross-section increasing gradually in the air blowing direction; and the second air channel (62) is formed as a cylindrical structure; the first fan (1) is positioned at the first air channel (61); and the second fan (2) is positioned at the second air channel (62).

10. The air purifier according to claim 8 or 9, **characterized in that** the first fan (1) has an exhaust direction in an axial direction and inclined outwards, and the second fan (2) has an exhaust direction extending in the axial direction.

11. The air purifier according to any one of the claims 8 to 10, **characterized in that** the inside of the exhaust channel (6) is detachably mounted with the blower device of claim 2.

12. The air purifier according to claim 11, **characterized in that** a first hub (11) of the first fan (1) is connected to a first rotary shaft (31) of the motor (3); a second hub (21) of the second fan (2) is connected to a second rotary shaft (32) of the motor (3); a housing (33) of the motor (3) is partially disposed into the second hub (21); an exposed end from the second hub (21) is provided with a mounting portion (34); the inside of the exhaust channel (6) is fixedly provided with a mounting annular seat (7); the first rotary shaft (31) is passed through a central through hole of the mounting annular seat (7) and detachably connected with the second fan (2); and the mounting portion (34) is detachably connected to the mounting annular seat (7).

13. The air purifier according to claim 12, **characterized in that** the first rotary shaft (31) is passed through the first hub (11) and comes into profile surface connection with the first hub (11); and an end of the first rotary shaft (31) is detachably connected with a guiding cap (4).

14. The air purifier according to claim 12 or 13, **characterized in that** the second rotary shaft (32) is passed through the second hub (21) and comes into profile surface connection with the second hub (21); and an end of the second rotary shaft (32) is detachably connected with a limiting nut (8).

## Patentansprüche

1. Lüftungsvorrichtung für einen Luftreiniger, wobei die Lüftungsvorrichtung einen ersten Lüfter (1) und einen zweiten Lüfter (2) aufweist, die die gleiche Lüftungsrichtung haben und in der Lüftungsrichtung in einem Intervall hintereinander angeordnet sind; und wobei der erste Lüfter (1) und der zweite Lüfter (2) koaxial angeordnet sind und synchron von einem Motor (3) angetrieben werden,
**dadurch gekennzeichnet, dass** der erste Lüfter (1) derart eingerichtet ist, dass er einen Lüftungsdruck aufweist, der größer als der des zweiten Lüfters (2) ist, und der zweite Lüfter (2) derart eingerichtet ist, dass er eine größere Lüftungsrate als die des ersten Lüfters (1) aufweist, und dass der erste Lüfter (1) ein Mischströmungslüfter zwischen einem Axial strömungslüfter und einem Zentrifugalströmungslüfter ist, und der zweite Lüfter (2) ein Axialströmungslüfter ist.

2. Lüftungsvorrichtung für den Luftreiniger nach Anspruch 1, **dadurch gekennzeichnet, dass** der Motor (3) ein zweiwellig erstreckender Motor ist, der zwischen den Rotationszentren des ersten Lüfters (1) und des zweiten Lüfters (2) angeordnet ist.

3. Lüftungsvorrichtung für den Luftreiniger nach Anspruch 1 oder 2, **dadurch gekennzeichnet, dass** eine erste Nabe (11) des ersten Lüfters (1) mit einer ersten Rotationswelle (31) des Motors (3) verbunden ist; eine zweite Nabe (21) des zweiten Lüfters (2) mit einer zweiten Rotationswelle (32) des Motors (3) verbunden ist; ein Gehäuse (33) des Motors (3) teilweise in der ersten Nabe (11) oder der zweiten Nabe (21) angeordnet ist; und ein freiliegendes Ende mit einem Befestigungsabschnitt (34) zur Befestigung in dem Luftreiniger versehen ist.

4. Lüftungsvorrichtung für den Luftreiniger nach Anspruch 3, **dadurch gekennzeichnet, dass** die erste Nabe (11) des ersten Lüfters (1) mit einer Führungskappe (4) in einem proximalen Zentrum versehen ist, um den Luftstrom zu einer Vielzahl von ersten Schaufeln (12) zu leiten, die mit der ersten Nabe (11) in Umfangsintervallen verbunden sind, wobei die Führungskappe (4) vorzugsweise als konische Kappe mit einem bogenförmigen Kopf ausgebildet ist.

5. Lüftungsvorrichtung für den Luftreiniger nach einem der Ansprüche 1 bis 4, **dadurch gekennzeichnet, dass** der erste Lüfter (1) einen Durchmesser aufweist, der gleich oder kleiner als der des zweiten Lüfters (2) ist.

6. Lüftungsvorrichtung für den Luftreiniger nach einem der Ansprüche 1 bis 5, **dadurch gekennzeichnet, dass** ein Abstand zwischen dem ersten Lüfter (1) und dem zweiten Lüfter (2) 4mm-200mm beträgt.

7. Lüftungsvorrichtung für den Luftreiniger nach einem der Ansprüche 4 bis 6, **dadurch gekennzeichnet, dass** die Anzahl der ersten Schaufeln (12) des ersten Lüfters (1) gleich einer Anzahl von zweiten Schaufeln (22) des zweiten Lüfters (2) ist und bei den benachbarten ersten Schaufeln (12) und zweiten Schaufeln (22) die zweite Schaufel (22) in Umfangsrichtung von der ersten Schaufel (12) nach hinten versetzt ist.

8. Luftreiniger, der umfasst:
einen Reinigungskörper (5) und einen an dem Reinigungskörper (5) vorgesehenen Auslasskanal (6), **dadurch gekennzeichnet, dass** ein Inneres des Auslasskanals (6) an der Lüftungsvorrichtung nach einem der Ansprüche 1-7 angebracht ist.

9. Luftreiniger nach Anspruch 8, **dadurch gekennzeichnet, dass** der Auslasskanal (6) einen ersten Luftkanal (61) und einen zweiten Luftkanal (62) umfasst, die in der Lüftungsrichtung verbunden sind; wobei der erste Luftkanal (61) als eine konische Struktur mit einem Querschnitt ausgebildet ist, der allmählich in der Lüftungsrichtung zunimmt; und wobei der zweite Luftkanal (62) als eine zylindrische Struktur ausgebildet ist; wobei der erste Lüfter (1) an dem ersten Luftkanal (61) positioniert ist; und wobei der zweite Lüfter (2) an dem zweiten Luftkanal (62) positioniert ist.

10. Luftreiniger nach Anspruch 8 oder 9, **dadurch gekennzeichnet, dass** der erste Lüfter (1) eine Auslassrichtung in axialer Richtung aufweist und die nach außen geneigt ist, und der zweite Lüfter (2) eine Auslassrichtung aufweist, die sich in axialer Richtung erstreckt.

11. Luftreiniger nach einem der Ansprüche 8 bis 10, **dadurch gekennzeichnet, dass** das Innere des Auslasskanals (6) mit der Lüftungsvorrichtung nach Anspruch 2 abnehmbar angeordnet ist.

12. Luftreiniger nach Anspruch 11, **dadurch gekennzeichnet, dass** eine erste Nabe (11) des ersten Lüfters (1) mit einer ersten Rotationswelle (31) des Motors (3) verbunden ist; eine zweite Nabe (21) des zweiten Lüfters (2) mit einer zweiten Rotationswelle (32) des Motors (3) verbunden ist; ein Gehäuse (33) des Motors (3) teilweise in der zweiten Nabe (21) angeordnet ist; ein freiliegendes Ende von der zweiten Nabe (21) mit einem Befestigungsabschnitt (34) versehen ist; das Innere des Auslasskanals (6) fest mit einem ringförmigen Befestigungssitz (7) versehen ist; die erste Rotationswelle (31) durch ein zentrales Durchgangsloch des ringförmigen Befestigungssitzes (7) geführt und lösbar mit dem zweiten Lüfter (2) verbunden ist; und der Befestigungsabschnitt (34) lösbar mit dem ringförmigen Befestigungssitz (7) verbunden ist.

13. Luftreiniger nach Anspruch 12, **dadurch gekennzeichnet, dass** die erste Rotationswelle (31) durch die erste Nabe (11) hindurchgeführt wird und mit der ersten Nabe (11) in Profilflächenverbindung kommt; und ein Ende der ersten Rotationswelle (31) mit einer Führungskappe (4) lösbar verbunden ist.

14. Luftreiniger nach Anspruch 12 oder 13, **dadurch gekennzeichnet, dass** die zweite Rotationswelle (32) durch die zweite Nabe (21) hindurchgeführt ist und in Profilflächenverbindung mit der zweiten Nabe (21) kommt; und ein Ende der zweiten Rotationswelle (32) lösbar mit einer Begrenzungsmutter (8) verbunden ist.

## Revendications

1. Dispositif de soufflage d'air pour un purificateur d'air, dans lequel le dispositif de soufflage d'air comprend un premier ventilateur (1) et un deuxième ventilateur (2) qui ont une même direction de soufflage d'air et sont disposés de manière séquentielle dans la direction de soufflage d'air à un intervalle ; et le premier ventilateur (1) et le deuxième ventilateur (2) sont montés de manière coaxiale et entraînés de manière synchrone par un moteur (3),
**caractérisé en ce que** le premier ventilateur (1) est adapté pour avoir une pression de soufflage d'air supérieure à celle du deuxième ventilateur (2), et le deuxième ventilateur (2) est adapté pour avoir un débit de soufflage d'air supérieur à celui du premier ventilateur (1), et **en ce que** le premier ventilateur (1) étant un ventilateur à flux mixte entre un ventilateur à flux axial et un ventilateur à flux centrifuge, et le deuxième ventilateur (2) étant un ventilateur à flux axial.

2. Dispositif de soufflage d'air pour le purificateur d'air selon la revendication 1, **caractérisé en ce que** le moteur (3) est un moteur à double arbre d'extension monté entre les centres de rotation du premier ventilateur (1) et du deuxième ventilateur (2).

3. Dispositif de soufflage d'air pour le purificateur d'air selon la revendication 1 ou 2, **caractérisé en ce qu'**un premier moyeu (11) du premier ventilateur (1) est relié à un premier arbre rotatif (31) du moteur (3) ; un deuxième moyeu (21) du deuxième ventilateur (2) est relié à un deuxième arbre rotatif (32) du moteur (3) ; un boîtier (33) du moteur (3) est partiellement disposé dans le premier moyeu (11) ou le deuxième moyeu (21) ; et une extrémité exposée est pourvue d'une partie de montage (34) pour le montage dans le purificateur d'air.

4. Dispositif de soufflage d'air pour le purificateur d'air selon la revendication 3, **caractérisé en ce que** le premier moyeu (11) du premier ventilateur (1) est muni d'un capuchon de guidage (4) à un centre proximal, pour guider le flux d'air vers une pluralité de premières aubes (12) reliées au premier moyeu (11) à des intervalles circonférentiels, de préférence le capuchon de guidage (4) étant formé comme un capuchon conique avec une tête arquée.

5. Dispositif de soufflage d'air pour le purificateur d'air selon l'une des revendications 1 à 4, **caractérisé en ce que** le premier ventilateur (1) a un diamètre égal ou inférieur à celui du deuxième ventilateur (2).

6. Dispositif de soufflage d'air pour le purificateur d'air selon l'une quelconque des revendications 1 à 5, **caractérisé en ce qu'**une distance entre le premier ventilateur (1) et le deuxième ventilateur (2) est de 4mm-200mm.

7. Dispositif de soufflage d'air pour le purificateur d'air selon l'une quelconque des revendications 4 à 6, **caractérisé en ce que** le nombre de premières aubes (12) du premier ventilateur (1) est le même qu'un nombre de deuxièmes aubes (22) du deuxième ventilateur (2), et dans la première aube (12) et la deuxième aube (22) voisines, la deuxième aube (22) est décalée vers l'arrière dans une direction circonférentielle par rapport à la première aube (12).

8. Purificateur d'air, comprenant :
un corps de purificateur (5) et un canal d'évacuation (6) prévu sur le corps de purificateur (5), **caractérisé en ce qu'**un intérieur du canal d'évacuation (6) est monté avec le dispositif de soufflage d'air selon l'une quelconque des revendications 1 à 7.

9. Purificateur d'air selon la revendication 8, **caractérisé en ce que** le canal d'évacuation (6) comprend un premier canal d'air (61) et un deuxième canal d'air (62) reliés dans la direction de soufflage d'air ; le premier canal d'air (61) est formé comme une structure conique ayant une section transversale augmentant progressivement dans la direction de soufflage d'air ; et le deuxième canal d'air (62) est formé comme une structure cylindrique ; le premier ventilateur (1) est positionné au niveau du premier canal d'air (61) ; et le deuxième ventilateur (2) est positionné au niveau du deuxième canal d'air (62).

10. Purificateur d'air selon la revendication 8 ou 9, **caractérisé en ce que** le premier ventilateur (1) a une direction d'évacuation dans une direction axiale et inclinée vers l'extérieur, et le deuxième ventilateur (2) a une direction d'évacuation s'étendant dans la direction axiale.

11. Purificateur d'air selon l'une quelconque des revendications 8 à 10, **caractérisé en ce que** l'intérieur du canal d'évacuation (6) est monté de manière amovible avec le dispositif de soufflage d'air de la revendication 2.

12. Purificateur d'air selon la revendication 11, **caractérisé en ce qu'**un premier moyeu (11) du premier ventilateur (1) est relié à un premier arbre rotatif (31) du moteur (3) ; un deuxième moyeu (21) du deuxième ventilateur (2) est relié à un deuxième arbre rotatif (32) du moteur (3) ; un boîtier (33) du moteur (3) est partiellement disposé dans le deuxième moyeu (21) ; une extrémité exposée du deuxième moyeu (21) est pourvue d'une partie de montage (34) ; l'intérieur du canal d'évacuation (6) est pourvu de manière fixe d'un siège annulaire de montage (7) ; le premier arbre rotatif (31) passe à travers un trou central du siège annulaire de montage (7) et est relié de manière amovible au deuxième ventilateur (2) ; et la partie de montage (34) est reliée de manière amovible au siège annulaire de montage (7).

13. Purificateur d'air selon la revendication 12, **caractérisé en ce que** le premier arbre rotatif (31) est passé à travers le premier moyeu (11) et vient en connexion de surface profilée avec le premier moyeu (11) ; et une extrémité du premier arbre rotatif (31) est connectée de manière amovible avec un capuchon de guidage (4).

14. Purificateur d'air selon la revendication 12 ou 13, **caractérisé en ce que** le deuxième arbre rotatif (32) passe à travers le deuxième moyeu (21) et vient en connexion de surface profilée avec le deuxième moyeu (21) ; et une extrémité du deuxième arbre rotatif (32) est connectée de manière amovible avec un écrou de limitation (8).
